# EUROPÄISCHE PATENTSCHRIFT

(11) **EP 1 904 822 B1**
(45) Veröffentlichungstag und Bekanntmachung des Hinweises auf die Patenterteilung: **20.10.2010**
(21) Anmeldenummer: 06741679.2
(22) Anmeldetag: 04.07.2006
(51) Int. Cl.: G01L 9/00, G01L 19/04

(54) **SENSOREINHEIT**
SENSOR UNIT
ENSEMBLE CAPTEUR

(30) Priorität: 20.07.2005 CH 12122005
(43) Veröffentlichungstag der Anmeldung: 02.04.2008
(73) Patentinhaber: Kistler Holding AG, 8408 Winterthur (CH)
(72) Erfinder: VON BERG, Jochen, CH-8409 Winterthur (CH); SONDEREGGER, Christof, CH-8413 Neftenbach (CH); CAVALLONI, Claudio, CH-8105 Regensdorf (CH); TANNER, René, CH-8472 Seuzach (CH); GNIELKA, Marco, CH-8400 Winterthur (CH)
(86) Internationale Anmeldenummer: PCT/CH2006/000354
(87) Internationale Veröffentlichungsnummer: WO 2007/009277

(56) Entgegenhaltungen:
- US-A- 5 509 312
- US-A1- 2002 033 050
- US-A1- 2003 205 091

## Beschreibung

### Technisches Gebiet

Die Erfindung betrifft eine Sensoreinheit zur Messung einer Messgrösse, insbesondere in einem aggressiven Medium, einen Messfühler mit einer erfindungsgemässen Sensoreinheit, sowie eine Brennkraftmaschine, ein hydraulisches oder pneumatisches Werkzeug und ein Klimagerät mit einer Sensoreinheit oder einem Messfühler gemäss der Erfindung.

### Stand der Technik

Im Stand der Technik sind eine Vielzahl unterschiedlicher Sensoren zur Messung verschiedenster Messgrössen bekannt. Immer wichtiger werden dabei Sensoren, die zum Beispiel Temperatur und Druckdaten von Maschinen oder Werkzeugen erfassen, um bestimmte Betriebszustände zu überwachen oder diese Einrichtungen zu steuern oder zu regeln. Problematisch ist dabei grundsätzlich die hochgenaue Erfassung entsprechender Messgrössen in aggressiven Medien, insbesondere dann, wenn der Sensor neben dem zu messenden Medium noch mit äusseren Einflüssen beaufschlagt wird, die mit der eigentlichen Messung nichts zu tun haben. Ein typisches Beispiel ist ein Piezosensor, der den Druck und / oder die Temperatur in einem aggressiven Medium, z.B. den eines Motoröls im Betriebszustand der Brennkraftmaschine erfassen soll. Daher werden Sensoren für solche Anwendungen normalerweise mit einer Membran ausgerüstet, welche die zu messende Grösse über ein flüssiges oder starres Koppelmedium auf das eigentliche Messelement überträgt und dieses vor dem aggressiven Medium schützt, wie beispielsweise in der EP 0251592 erläutert. Häufig tritt aber hier das Problem auf, dass der Sensor durch den Einbau als solches, das heisst durch den Kontakt mit der Maschine, beeinflusst wird, da durch den Einbau an sich eine Kopplung zwischen Maschine und Sensor hergestellt wird, wodurch zum Beispiel thermisch oder mechanisch induzierte Verspannungen auf den Sensor übertragen werden, die im Sensor aufgrund seiner piezoelektrischen und / oder piezoresistiven und / oder sonstigen Messprinzipien Messsignale vortäuschen, die gar nicht aus dem zu messenden Medium stammen und dadurch das eigentliche Messsignal in völlig unzulässiger Weise verfälschen.

US 2002/0033050 A1, US 5 509 312, US 2003/0205091 A1 offenbaren verschiedene Drucksensoren.

### Darstellung der Erfindung

Die Aufgabe der Erfindung ist es daher, eine verbesserte Sensoreinheit bereitzustellen, die auch in Gegenwart eines aggressiven Mediums zuverlässig verwendbar ist und die unempfindlich gegen störende mechanische und thermische Umgebungseinflüsse ist, so dass insbesondere die Messgenauigkeit und / oder die Messempfindlichkeit, bzw. das Signal zu Rausch Verhältnis im Vergleich zu den aus dem Stand der Technik bekannten Sensoreinheiten wesentlich erhöht wird.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit eine Sensoreinheit zur Messung einer Messgrösse, insbesondere in einem aggressiven Medium, umfassend einen in einer Sensorkapsel angeordneten Sensor, mit einem an einem Grundkörper angeordneten Sensorbereich. Zur Erfassung der Messgrösse im Sensorbereich ist in der Sensorkapsel eine Messöffnung vorgesehen, welche erlaubt, dass das Medium direkt bis zum Sensorbereich vordringen kann. Der Sensorbereich weist auf einer von der Messöffnung abgewandten Seite eine mit einer Messelektronik versehene Messfläche auf, wobei zur Übertragung eines von der Messelektronik generierten Sensorsignals am Sensor eine elektrische Zuleitung vorgesehen ist.

Der Sensor ist dabei an einer Dichtfläche derart dichtend an der Sensorkapsel angeordnet, dass die Messfläche von dem Medium isoliert ist. Erfindungsgemäss ist ein Entkopplungsmittel vorgesehen, mit welchem der Sensor von thermisch und / oder mechanisch induzierten Veränderungen der Sensorkapsel entkoppelbar ist.

Dadurch, dass erfindungemäss ein Entkopplungsmittel vorgesehen ist, mit welchem der Sensor von thermisch und / oder mechanisch induzierten Veränderungen der Sensorkapsel entkoppelbar ist, erfasst der Sensor als Messgrösse im wesentlichen nur noch die Eigenschaften des Mediums, das unmittelbar auf den Sensorbereich des Sensors einwirkt. D.h., störende Einflüsse, die durch die unvermeidliche Kopplung des Sensors mit der Umgebung, z.B. mit einem Gehäuse des Sensors bei den bekannten Sensoreinheiten eingekoppelt werden, können durch die vorliegende Erfindung praktisch vollständig unterdrückt werden. Die Entkopplungsmittel können dabei zum Beispiel elastische Medien umfassen, so dass Veränderungen des Sensorgehäuses, wie zum Beispiel Verspannungen oder Längenänderungen aufgrund thermischer oder mechanischer Einflüsse, thermische Dehnungen aufgrund von Temperaturschwankungen oder mechanische Spannungen, die zum Beispiel durch den Einbau des Sensors in eine Vorrichtung induziert werden, nicht auf den Sensor selbst übertragen werden, so dass die Messelektronik nicht mit den störenden Umgebungseinflüssen beaufschlagt wird, und die Messgenauigkeit und Messempfindlichkeit des Sensors im Vergleich zum Stand der Technik deutlich verbessert ist. Das ist besonders dann von Vorteil, wenn die Messelektronik z.B. piezoelektrische und / oder piezoresistive Sensoren zur Messung von Druck, Kraft oder Beschleunigung umfasst. Ist der Sensor zum Beispiel ein Druck- oder Temperatursensor auf piezoelektrischer und / oder piezoresistiver Basis zur Messung eines Drucks oder einer Temperatur in einem Medium, so können auf den Sensor übertragene mechanische Verspannungen z.B. von einem Gehäuse des Sensors bzw. der Sensorkapsel dazu führen, dass das Messsignal verfälscht wird und der Sensor ein Sensorsignal generiert, dass nicht dem tatsächlichen Druck bzw. der Temperatur des Mediums entspricht.

Dabei können die Entkopplungsmittel selbstverständlich gleichzeitig oder alternativ derart ausgestaltet sein, dass der Sensor auch von direkten thermischen Einwirkungen durch die Sensorkapsel entkoppelbar ist. Das ist insbesondere dann von Vorteil, wenn die Messelektronik einen Temperatursensor zur Messung einer Temperatur des Mediums umfasst. In diesem Fall ist es besonders wichtig, dass eine Wärme- bzw. Temperaturübertragung zwischen Sensor und Sensorkapsel unterbleibt, so dass der Sensor auch tatsächlich die korrekte Temperatur des Mediums erfasst, und nicht eine durch thermische Einflüsse der Sensorkapsel verfälschte Temperatur.

Dabei kann das Entkopplungsmittel auch dadurch realisiert sein das z.B. die Sensorkapsel aus einem mechanisch und / oder thermisch angepassten Material, insbesondere aus einem Metall oder einer Metalllegierung besteht, so dass z.B. die Sensorkapsel und die daran thermisch und / oder mechanisch angekoppelten Bestandteil des Sensors ungefähr gleich thermische Ausdehnungskoeffizienten aufweisen, so dass z.B. bei einer Temperaturänderungen keine mechanische Spannungen auftreten können.

Da der Sensor insbesondere, aber nicht nur, zum Einsatz in aggressiven Medien, wie zum Beispiel zur Messung von Druck und / oder Temperatur in einer mehr oder weniger aggressiven Flüssigkeit, wie Motoröl, Bremsflüssigkeit, Kühlflüssigkeit usw. vorgesehen ist, ist die Messelektronik so am Sensorbereich des Sensors angeordnet, dass die Messelektronik nicht direkt mit dem aggressiven Medium beaufschlagt wird. Das wird dadurch erreicht, dass die Messelektronik auf einer von der Messöffnung der Sensorkapsel abgewandten Seite auf einer Messfläche angeordnet ist, wobei an einer Dichtfläche der Sensor derart dichtend an der Sensorkapsel angeordnet ist, dass die Messfläche mit der Messelektronik vom Medium isoliert ist. Dabei können die Entkopplungsmittel vorteilhaft gleichzeitig zur Entkopplung von thermisch und / oder mechanisch induzierten Veränderungen der Sensorkapsel und als Dichtmedium zur Isolation der Messelektronik von dem zu messenden Medium dienen.

In einem für die Praxis besonders wichtigen Ausführungsbeispiel ist das Entkopplungsmittel im Bereich der Messöffnung vorgesehen und kann gleichzeitig als Dichtung zur Abdichtung der Messelektronik gegen das zu messende Medium dienen, so dass die in Bezug auf die Messöffnung aussen liegenden Flächen des Sensor nicht mit dem zu messenden Medium in Kontakt kommen können.

Dabei ist es selbstverständlich auch möglich, dass das Entkopplungsmittel an einer radial nach aussen gerichteten Umfangsfläche des Sensors vorgesehen ist und ebenfalls, wie zuvor beschrieben, als Dichtung fungiert.

Besonders vorteilhaft ist das Entkopplungsmittel am Sensorbereich auf der von der Messöffnung abgewandten Seite, insbesondere im Bereich der elektrischen Zuleitung vorgesehen und dichtend in einer speziellen Variante eines erfindungsgemässen Ausführungsbeispiels gleichzeitig die Messelektronik gegen das zum Beispiel aggressive Medium ab.

Bei einem anderen Ausführungsbeispiel ist das aggressive Medium dem Sensorbereich über eine Messhülse, insbesondere über eine an einer Lochmembran dichtend angeordneten Messhülse zuführbar. Dadurch kann auf eine Dichtung an den äusseren Flächen des Sensors gänzlich verzichtet werden, da die Lochmembran ein Eindringen des Mediums in die Sensorkapsel als solches unterbindet und die Messhülse das zu messende Medium direkt einer der Messfläche abgewandten Seite des Sensorbereichs zuführt.

Dabei kann sowohl die Lochmembran, als auch die Messhülse als Entkopplungsmittel ausgestaltet sein, so dass diese die Funktion der Entkopplung des Sensors von thermisch und / oder mechanisch induzierten Veränderungen der Sensorkapsel übernimmt.

In der Praxis wird die Sensoreinheit häufig ein Befestigungsmittel umfassen, beispielsweise ein Einbaugehäuse mit einer Gewindeverschraubung, insbesondere mit einem M5 Gewinde, oder mit einem Schnellverschluss, z.B. mit einem Bajonettverschluss, so dass die Sensoreinheit einfach und zuverlässig in eine Vorrichtung zur Messung eines Mediums eingebaut werden kann. In einem besonders bevorzugten Ausführungsbeispiel ist dabei das Befestigungsmittel selbst als Entkopplungsmittel ausgestaltet, so dass die Sensorkapsel von thermisch und / oder mechanisch induzierten Veränderungen der Einbauumgebung entkoppelbar ist. In diesem Fall ist es sogar möglich, dass zwischen dem Sensor selbst und der Sensorkapsel keine weiteren Entkopplungsmittel vorgesehen werden müssen, sondern nur noch Dichtelemente, welche die Messelektronik vor einer direkten Beaufschlagung durch das Medium schützen.

Zur mechanischen Fixierung des Sensors ist die elektrische Zuleitung besonders vorteilhaft als im wesentlichen unflexibler Pin ausgestaltet, oder es ist eine im wesentlichen unflexible Durchführung für die Zuleitung, die in dem Fall zum Beispiel eine flexible elektrische Leitung sein kann, vorgesehen, wobei die Durchführung dann den Sensor fixieren kann. D.h., die elektrische Zuleitung zum Sensor wird besonders vorteilhaft als im wesentlichen unflexibler Pin ausgestaltet, welcher über elektrisch leitende Kontakte, die auch als Bumps bezeichnet werden und z.B. aus Gold oder diversen Loten mit dem Sensor verbunden sein können und diesen somit nicht nur elektrisch kontaktieren, sondern gleichzeitig mechanisch fixieren. Dabei kann der unflexible Pin oder die unflexible Durchführung über ein Entkopplungsmittel, das z.B. ein mehr oder weniger elastischer Kunststoff oder z.B. ein Harz oder eine harzartige Substanz sein kann, von thermisch und / oder mechanisch induzierten Veränderungen der Sensorkapsel entkoppelt werden.

Dabei müssen die Entkopplungsmittel nicht unbedingt, wie oben für verschiedene Varianten beschrieben, gleichzeitig als Dichtung zur Abdichtung der Sensorfläche bzw. der Messelektronik dienen. Auch müssen die Entkopplungsmittel nicht unbedingt ein mehr oder weniger elastischer Kunststoff oder ein Harz oder eine harzartige Substanz sein.

Wenn es beispielsweise vor allem auf die Entkopplung mechanischer Verzerrungen, wie Längendehnungen usw. ankommt, können die Entkopplungsmittel auch dadurch realisiert sein, dass die in Kontakt stehenden Materialien gleiche bzw. sehr ähnliche thermische Ausdehnungskoeffizienten haben. Oder wenn es im wesentlichen auf eine Entkopplung in Bezug auf Wärme- bzw. Temperaturübertragung ankommt, kann das Entkopplungsmittel z.B. ein schlechter Wärmeleiter wie Glas sein. Glas wird zwar in der Regel mechanische Verzerrungen nur sehr unzureichend auskoppeln. Wenn es aber zum Beispiel nur auf eine sehr zuverlässige Messung der Temperatur des Mediums ankommt, die aufgrund des Messprinzips durch mechanische Verzerrungen im Sensor nicht beeinflusst wird, können der Werkstoff Glas oder andere schlecht Wärme leitende Werkstoffe trotzdem vorteilhaft als Entkopplungsmittel eingesetzt werden. Ebenso ist es zum Beispiel denkbar, dass die Entkopplungsmittel durch ein mehr oder weniger starkes Vakuum zwischen Sensor und Sensorkapsel bereitgestellt werden oder durch jede andere geeignete Massnahme, die dem Fachmann als wirksames Entkopplungsmittel bekannt ist.

Wenn die zu messende Grösse des Mediums beispielsweise eine relative Grösse ist, die auf eine Referenzmessgrösse bezogen zu betrachten ist, kann die erfindungsgemässe Sensoreinheit auch Mittel umfassen, so dass die Messfläche mit einer Referenzmessgrösse beaufschlagbar ist.

In für die Praxis besonders wichtigen Ausführungsbeispielen einer erfindungsgemässen Sensoreinheit ist der Sensor, im ein Drucksensor, im speziellen ein relativer Drucksensor, insbesondere ein, und im speziellen relativer piezoresistiver und /oder ein piezoelektrischer Drucksensor und / oder ein piezoelektrischer und / oder piezoresistiver Temperatursensor.

Der Fachmann versteht dabei, dass alle diskutierten Ausführungsbeispiele für spezielle Anwendungen auch geeignet kombiniert werden können, und die vorgestellten Ausführungsbeispiele repräsentativ für weitere, hier nicht ausführlich beschriebene Ausführungsbeispiele der Erfindung, diskutiert wurden.

Die Erfindung betrifft weiterhin einen Messfühler mit einer Sensoreinheit insbesondere zur Messung eines Gasdrucks und / oder einer Temperatur in einem Motoreinlass einer Brennkraftmaschine und / oder in einem Motorauslass und / oder in einem Verbrennungsraum und / oder in einem Motorgehäuse und / oder in einem Auspuffsystem, oder zur Messung eines Drucks und / oder einer Temperatur eines Motoröls, einer Bremsflüssigkeit, eines Hydrauliköls, eines Getriebeöls, eines Kühlmittels, oder einer Kühlflüssigkeit, insbesondere von Wasser.

Des weiteren betrifft die Erfindung eine Brennkraftmaschine, ein hydraulisches oder pneumatisches Werkzeug oder ein Klimagerät mit einer Sensoreinheit und / oder mit einem Messfühler, wie oben ausführlich beschrieben.

### Kurze Beschreibung der Zeichnungen

Im Folgenden wird die Erfindung anhand der Zeichnung näher erläutert. Es zeigen in schematischer Darstellung:
- Fig. 1: ein erstes Ausführungsbeispiel einer erfindungsge- mässen Sensoreinheit;
- Fig. 2: ein zweites Ausführungsbeispiel gemäss Fig. 1 mit flexiblen Zuleitungen, Schutzgitter, und Referenz- mittel;
- Fig. 3: ein drittes Ausführungsbeispiel;
- Fig. 4: ein viertes Ausführungsbeispiel;
- Fig. 5: ein Ausführungsbeispiel mit Messhülse, Lochmembran, und Schutzgitter;
- Fig. 6: ein Ausführungsbeispiel mit einer Messhülse als Entkopplungsmittel.

### Wege zur Ausführung der Erfindung

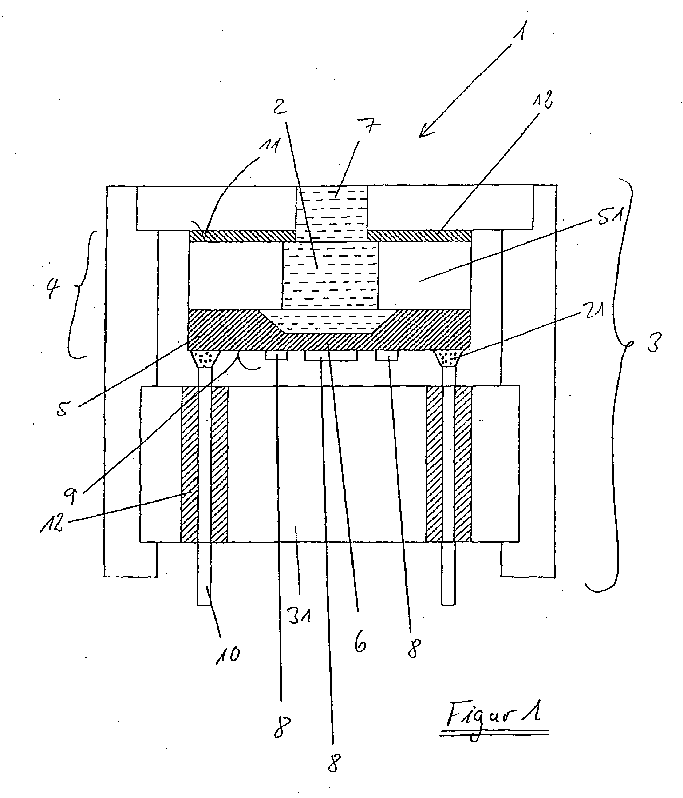

Die Fig. 1 zeigt in einer schematischen Darstellung ein erstes Ausführungsbeispiel einer erfindungsgemässen Sensoreinheit, die im folgenden gesamthaft mit dem Bezugszeichen 1 bezeichnet wird.

Die Sensoreinheit 1, die insbesondere zur Messung einer Messgrösse in einem aggressiven Medium 2 geeignet ist, umfasst eine Sensorkapsel 3, in welcher ein Sensor 4 zur Aufnahme einer Messgrösse in einem aggressiven Medium 2 angeordnet ist. Die Sensoreinheit 1 kann z.B. ein kombinierter Druck/Temperatursensor zur Messung des Öldrucks und / oder der Temperatur des Motoröls in einer Brennkraftmaschine sein. Der Sensor 4 umfasst einen Träger 51, der im vorliegenden Fall ein Träger 51 aus Glas ist, der mit dem Grundkörper 5, der bei dem Ausführungsbeispiel in Figur 1 aus Silizium und / oder einer Siliziumverbindung wie SOI (Silicon On Insulator) und / oder SiC und / oder eine andere geeignete Siliziumverbindung ist, verbunden ist. Eine Messöffnung 7 in der Sensorkapsel 3 gewährleistet, dass das Medium 2 in die Sensoreinheit 1 eintreten kann. Der Grundkörper 5 weist einen für die Messgrösse sensitiven Sensorbereich 6 auf, auf den das Medium 2 direkt einwirkt. Auf einer der Messöffnung 7 abgewandten Seite des Sensorbereichs 6 ist eine Messelektronik 8 auf einer Messfläche 9 vorgesehen, an der zur Übertragung eines von der Messelektronik 8 generierten Sensorsignals an eine in Fig. 1 nicht dargestellte Auswerteeinheit, eine elektrische Zuleitung 10 vorgesehen ist. Die elektrische Zuleitung 10 ist in Form eines im wesentlichen unflexiblen Pins 10 ausgestaltet, der zum Beispiel ein mehr oder weniger starrer Stift 10 aus Kupfer oder Gold oder einem anderen geeigneten Material sein kann, und den Sensor 4 nicht nur elektrisch zur Übertragung der Sensorsignale aus der Messelektronik 8 kontaktiert, sondern gleichzeitig den Sensor 4 auf einer Trägerplatte 31 der Sensorkapsel 3 mechanisch fixiert. Die Verbindung zwischen dem starren Stift 10 und der Messfläche 9 wird dabei bevorzugt über einen sogenannten Bump hergestellt, der aus Gold, einem geeigneten Lot oder einem anderen geeigneten Material besteht. Um den Sensor 4 von thermischen und / oder mechanisch induzierten Veränderungen der Sensorkapsel 3 zu entkoppeln, sind die Pins 10 in ein Entkopplungsmittel 12, das hier z.B. ein Glas oder ein mehr oder weniger elastischer Kunststoff oder ein Harz ist, eingebettet. Die Verwendung von im wesentlichen unflexiblen Pins 10 in Form von Stiften 10 ist insbesondere dann von grossem Vorteil, wenn die Sensoreinheit 1 grossen mechanischen Belastungen ausgesetzt ist, z.B. den Vibrationen einer Brennkraftmaschine, und dadurch zu befürchten ist, dass z.B. dünne Drähte 10 als Zuleitungen 10 brechen oder reissen könnten.

Zusätzlich zu den Entkopplungsmitteln 12 an den elektrischen Zuleitungen 10, ist zwischen dem Glasträger 51 an der Dichtfläche 11 ein als Dichtung ausgestaltetes Entkopplungsmittel 12 vorgesehen, das z.B. ein Kunststoff, eine gummiartige Substanz wie ein Gel oder eine harzartige Substanz sein kann, so dass der Träger 51 von thermischen und / oder mechanisch induzierten Veränderungen der Sensorkapsel 3 entkoppelt ist und gleichzeitig das aggressive Medium 2 von der Messfläche 9 bzw. der Messelektronik 8 isoliert ist. Dadurch kann mit der Sensoreinheit 1 der Fig. 1, wie selbstverständlich mit allen erfindungsgemässen Sensoreinheiten 1, auch in sehr aggressiven Medien 2, wie heissen und / oder chemisch oder physikalisch aggressiven Medien 2, wie Flüssigkeiten oder Gasen gemessen werden, ohne dass die Messelektronik 8 in Mitleidenschaft gezogen wird.

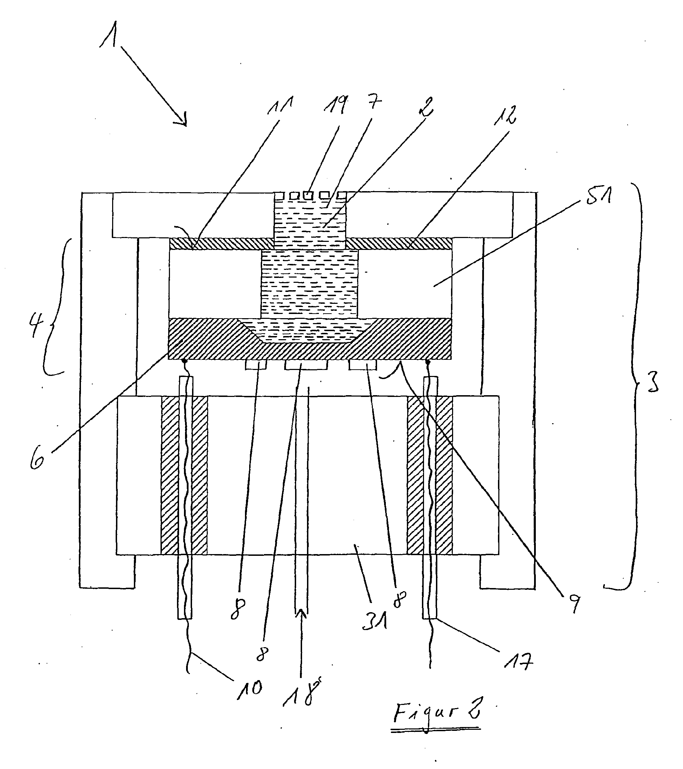

In Fig. 2 ist ein zweites Ausführungsbeispiel gemäss Fig. 1 mit flexiblen Zuleitungen 10 und einem Referenzmittel 18 dargestellt. Bei diesem Ausführungsbeispiel ist der Sensor 4 nur über den Träger 51 und ein als Dichtung ausgestaltetes Entkopplungsmittel 12 an der Dichtfläche 11 mechanisch an der Sensorkapsel 3 fixiert. Die elektrischen Zuleitungen 10 sind hier als flexible elektrische Drähte 10 ausgeführt und werden durch Durchführungen 17 durch die Trägerplatte 31 an die Messfläche 9 herangeführt. Die Verwendung von dünnen flexiblen elektrischen Drähten 10 als Zuleitung 10, kann z.B. insbesondere dann vorteilhaft sein, wenn die Zu- oder Abfuhr von Wärme über die Zuleitungen 10 minimiert werden muss und die Sensoreinheit keinen besonders grossen mechanischen Belastungen ausgesetzt ist, so dass ein Brechen oder Reissen der Drähte nicht zu befürchten ist. Bei dem Ausführungsbeispiel der Fig. 2 ist an der Messöffnung 7 zusätzlich ein Schutzgitter 19 vorgesehen, das z.B. Schmutzpartikel zurückhält, so dass der Sensorbereich 6 nicht beschädigt wird.

Über das Referenzmittel 18 kann der Messfläche 9 bzw. der Messelektronik 8 eine Referenzmessgrösse zugeführt werden, so dass mit der Sensoreinheit 1 eine Referenzmessung durchgeführt werden kann. Ist der Sensor 4 z.B. ein Drucksensor, so kann das Referenzmittel 18 eine Druckleitung sein, durch die die Messfläche 9 mit einem vorgebbaren Referenzdruck beaufschlagbar ist, so dass mit dem Sensor 4 eine Druckdifferenz zwischen dem Medium 2 und dem Referenzdruck direkt bestimmbar ist.

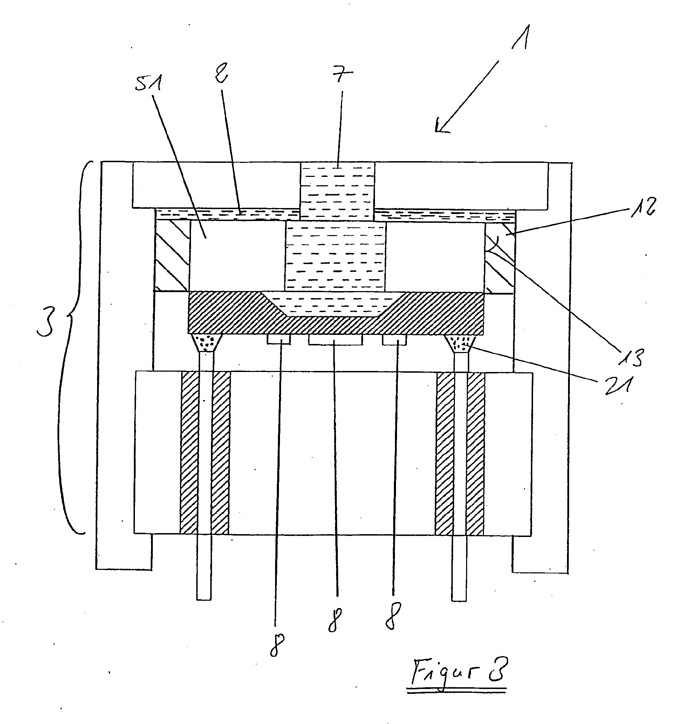

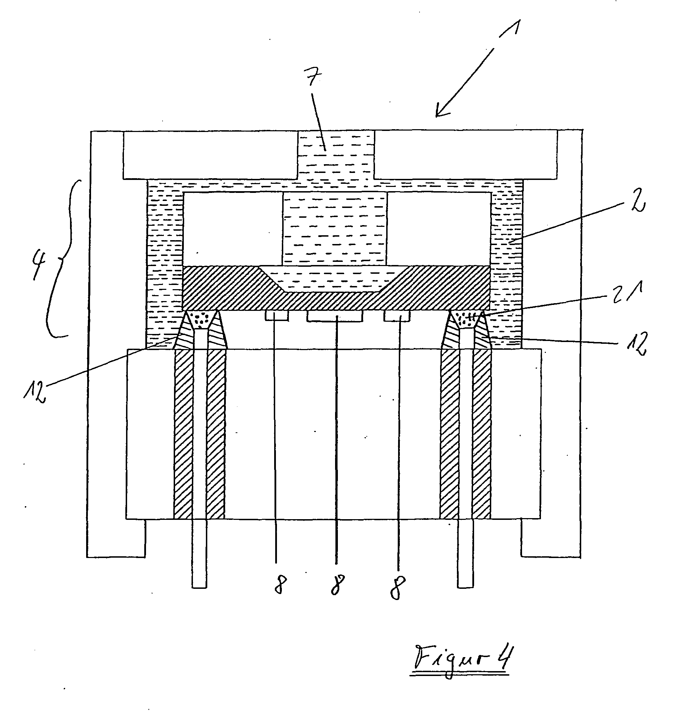

Die Fig. 3 und Fig. 4 zeigen ein drittes und viertes Ausführungsbeispiel der vorliegenden Erfindung. Diese beiden Beispiele unterscheiden sich von dem in Fig. 1 dargestellten bevorzugten Ausführungsbeispiel nur dadurch, dass die Entkopplungsmittel 12, die auch hier gleichzeitig die Funktion einer Abdichtung der Messelektronik 8 gegenüber dem aggressiven Medium 2 übernehmen, nicht im Bereich der Messöffnung 7 vorgesehen sind, sondern im Fall der Fig. 3 zwischen einer radial nach aussen gerichteten Umfangsfläche 13 des Sensors 4 und der Sensorkapsel 3, während die Entkopplungsmittel 12 im Beispiel der Fig. 4 am Grundkörper 5 auf der von der Messöffnung 7 abgewandten Seite im Bereich der elektrischen Zuleitung 10 vorgesehen sind. Eine Anordnung gemäss Fig. 4 kann insbesondere dann von grossem Vorteil sein, wenn z.B. eine gleichmässige Temperierung des Sensors 4 angezeigt ist. Selbstverständlich können die in Fig. 3 und Fig. 4 dargestellten Dichtmassnahmen auch in geeigneter Weise kombiniert werden.

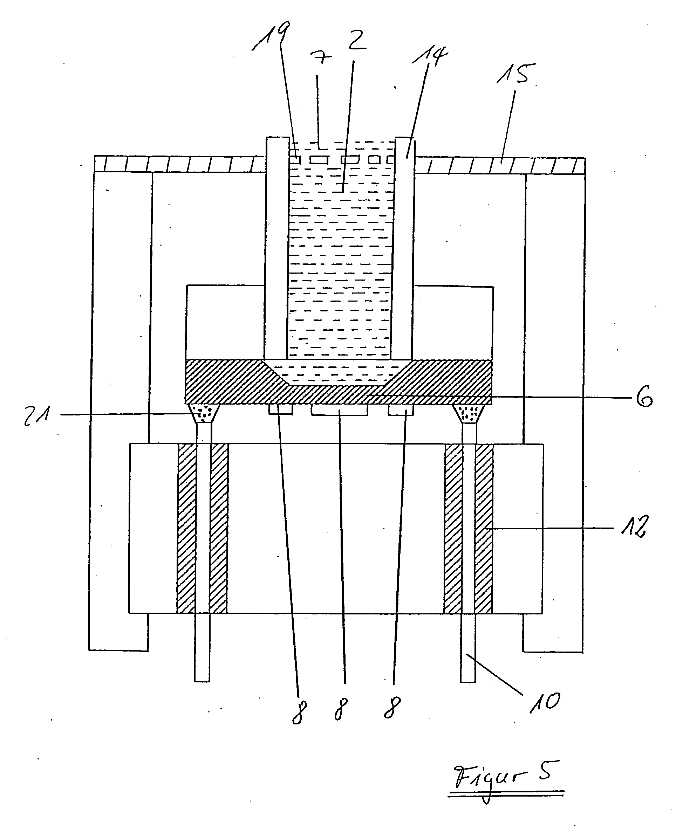

In Fig. 5 ist ein anderes Ausführungsbeispiel einer erfindungsgemässen Sensoreinheit 1 mit Messhülse 14 und Lochmembran 15 schematisch dargestellt. Bei dieser Ausführungsvariante wird das aggressive Medium 2 dem Sensorbereich 6 über eine Messhülse 14 zugeführt, die im vorliegenden Beispiel dichtend an einer Öffnung der Lochmembran 15 angeordnet ist. Um z.B. Schmutzteilchen, die sich im Medium 2 befinden, vom Sensorbereich 6 fernzuhalten, ist, ähnlich wie in Fig. 2, an der Messöffnung 7 ein Schutzgitter 19 vorgesehen, das beispielsweise ein Maschennetz 19 aus Stahl oder Kunststoff oder aus einem anderen Material sein kann. Dadurch, dass die Messhülse 14 dichtend durch die Öffnung der Lochmembran 15 durchgeführt ist und die Lochmembran 15 ebenfalls dichtend an der Sensorkapsel 3 angebracht ist, z.B. mit einem geeigneten Kleber an der Sensorkapsel 3 angeklebt ist, kann das aggressive Fluid 2 nur durch die Messhülse 14 in das Innere der Sensorkapsel 3 gelangen und ist somit allein der von der Messelektronik 8 abgewandten Seite des Sensorbereichs 6 zuführbar.

Der Sensor 4 kann dabei von thermisch und / oder mechanisch induzierten Veränderungen der Sensorkapsel 3 dadurch entkoppelt werden, dass, wie in Fig. 5 schematisch dargestellt, analog zu Fig. 1 die elektrischen Zuleitungen 10 in Entkopplungsmittel 12 eingebettet sind. Zusätzlich oder alternativ kann auch die Lochmembran 15 als Entkopplungsmittel 12 dienen, indem die Lochmembran 15 z.B. aus einem mehr oder weniger elastischen oder flexiblen Material aufgebaut ist, das z.B. mechanische Verspannungen kompensiert.

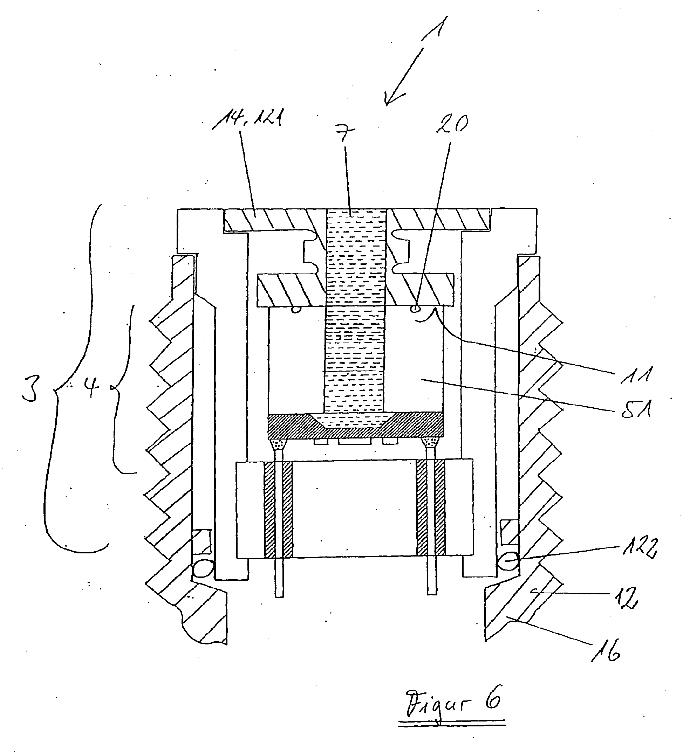

In Fig. 6 ist schliesslich ein Ausführungsbeispiel dargestellt, bei welchem die Messhülse 14 selbst als Entkopplungsmittel 12 eingesetzt wird und auf eine Lochmembran 15 verzichtet werden kann. Bei diesem Ausführungsbeispiel ist die Messhülse 14 als Entkopplungskörper 121 ausgestaltet, der an der Dichtfläche 11 des Trägers 51 dichtend, im vorliegenden Fall über eine Glasschweissung 20, mit dem Sensor 4 verbunden ist und andererseits so mit der Sensorkapsel 3 dichtend verbunden ist, dass das aggressive Medium 2 nur durch die Messöffnung 7 in das Innere der Sensoreinheit 1 gelangen kann. Die als Entkopplungskörper 121 ausgestaltete Messhülse 14 ist dabei so ausgestaltet und aus einem Material, z.B. aus einem geeigneten Kunststoff oder Metall oder einem anderen geeigneten Material hergestellt, dass sie den Sensor 4 von thermischen und / oder mechanisch induzierten Veränderungen der Sensorkapsel 3 entkoppelt. Dadurch, dass die Messhülse 14 selbst als Entkopplungsmittel 12 ausgestaltet ist, kann die Verbindung zwischen Sensor 4 und Messhülse 14 auch durch eine mehr oder weniger starre Verbindung erfolgen, wie im vorliegenden Fall über eine Glasschweissung 20.

Die Sensoreinheit 1 gemäss Fig. 6 umfasst dabei zusätzlich ein Befestigungsmittel 16, und bildet somit einen Messfühler, der im vorliegenden Fall eine M5-Verschraubung 16 zum Einbau in eine Brennkraftmaschine aufweist. Dabei ist die Verschraubung 16 der Fig. 6, was zwar sehr vorteilhaft, aber nicht unbedingt notwendig ist, als zusätzliches Entkopplungsmittel 12 ausgelegt. Das wird dadurch erreicht, dass im darstellungsgemäss unteren Bereich des Messfühlers Entkopplungstücke 122 zwischen der Verschraubung 16 und der Sensorkapsel 3 vorgesehen sind, die mechanische Verspannungen, die zum Beispiel beim Einschrauben des Messfühlers in eine Brennkraftmaschine entstehen, aber auch sonstige thermisch und / oder mechanisch induzierte Veränderungen, kompensieren können und damit nicht auf die Sensoreinheit 1 übertragen werden.

Durch die vorliegende Erfindung wird somit erstmals eine Sensoreinheit und ein Messfühler bereitgestellt, mit welchem sich auch in einem aggressiven Medium Messgrössen, wie zum Beispiel Druck oder Temperatur mit höchster Zuverlässigkeit und Genauigkeit bestimmen lassen, ohne dass störende Einflüsse aufgrund thermisch und / oder mechanisch induzierter Veränderungen aus der Einbauumgebung die Messung beeinflussen. Somit wird erstmals ein von störenden Umgebungseinflüssen entkoppelter Sensor zur Verfügung gestellt, der nicht nur, aber auch vor allem in aggressiven Medien, wie z.B. in einem aggressiven Öl oder in heissen aggressiven Verbrennungsgasen einer Brennkraftmaschine, einsetzbar ist und mit höchster Präzision und Genauigkeit Messsignale mit einem bisher nicht erreichbaren Signal zu Rausch Verhältnis erfasst werden können.

### Bezugszeichenliste

- 1: Sensoreinheit
- 2: Medium
- 3: Sensorkapsel
- 4: Sensor
- 5: Grundkörper
- 6: Sensorbereich
- 7: Messöffnung
- 8: Messelektronik
- 9: Messfläche
- 10: Elektrische Zuleitung
- 11: Dichtfläche
- 12: Entkopplungsmittel
- 13: Umfangsfläche
- 14: Messhülse
- 15: Lochmembran
- 16: Befestigungsmittel
- 17: Durchführung
- 18: Referenzmittel
- 19: Schutzgitter
- 20: Glasschweissung
- 21: Bump
- 31: Trägerplatte
- 51: Träger
- 121: Entkopplungskörper
- 122: Entkopplungsstücke

## Patentansprüche

1. Sensoreinheit zur Messung einer Messgrösse in einem aggressiven Medium (2), umfassend einen in einer Sensorkapsel (3) angeordneten Sensor (4) mit einem Grundkörper (5), welcher einen Sensorbereich (6) aufweist, wobei zur Erfassung der Messgrösse im Sensorbereich (6) in der Sensorkapsel (3) eine Messöffnung (7) vorgesehen ist, welche erlaubt, dass das aggresive Medium (2) direkt bis zum Sensorbereich (6) vordringen kann, und der Sensorbereich (6) auf einer von der Messöffnung (7) abgewandten Seite eine mit einer Messelektronik (8) versehene Messfläche (9) aufweist, wobei zur Übertragung eines von der Messelektronik (8) generierten Sensorsignals am Sensor (4) eine elektrische Zuleitung (10) vorgesehen ist, und der Sensor (4) an einer Dichtfläche (11) derart dichtend an der Sensorkapsel (3) angeordnet ist, dass die Messfläche (9) von dem aggressiven Medium (2) isoliert ist, wobei ein Entkopplungsmittel (12) zwischen dem Sensor (4) und der Sensorkapsel (3) vorgesehen ist, mit welchem der Sensor (4) von thermisch und / oder mechanisch induzierten Veränderungen der Sensorkapsel (3) entkoppelbar ist.

2. Sensoreinheit nach Anspruch 1, wobei das Entkopplungsmittel (12) angrenzend an die Messöffnung (7) vorgesehen ist.

3. Sensoreinheit nach Anspruch 1 oder 2, wobei das Entkopplungsmittel (12) an einer radial nach aussen gerichteten Umfangsfläche (13) des Sensors (4) vorgesehen ist.

4. Sensoreinheit nach einem der vorangehenden Ansprüche, wobei das Entkopplungsmittel (12) am Grundkörper (5) auf der von der Messöffnung (7) abgewandten Seite, insbesondere im Bereich der elektrischen Zuleitung (10), vorgesehen ist.

5. Sensoreinheit nach einem der vorangehenden Ansprüche, wobei das aggressive Medium (2) dem Sensorbereich (6) über eine Messhülse (14), insbesondere über eine an einer Lochmembran (15) dichtend angeordneten Messhülse (14) zuführbar ist.

6. Sensoreinheit nach Anspruch 5, wobei die Messhülse (14) als Entkopplungsmittel (12) ausgestaltet ist.

7. Sensoreinheit nach Anspruch 5 oder 6, wobei die Messhülse (14) an einer Lochmembran (15) dichtend angeordnet und die Lochmembran (15) als Entkopplungsmittel (12) ausgestaltet ist.

8. Sensoreinheit nach einem der vorangehenden Ansprüche, wobei die Sensoreinheit ein Befestigungsmittel (16) umfasst, insbesondere ein als Entkopplungsmittel (12) ausgestaltetes Befestigungsmittel (16).

9. Sensoreinheit nach einem der vorangehenden Ansprüche, wobei zur mechanischen Fixierung des Sensors (4) die elektrische Zuleitung (10) als im wesentlichen unflexibler Pin (10) ausgestaltet ist und / oder eine im wesentlichen unflexible Durchführung (17) für die Zuleitung (10) vorgesehen ist.

10. Sensoreinheit nach einem der vorangehenden Ansprüche, wobei Referenzmittel (18) vorgesehen sind, so dass die Messfläche (9) mit einer Referenzmessgrösse beaufschlagbar ist.

11. Sensoreinheit nach einem der vorangehenden Ansprüche, wobei der Sensor (4) ein Drucksensor, insbesondere ein piezoresistiver Drucksensor und / oder ein piezoelektrischer Drucksensor und / oder ein piezoresistiver Temperatursensor und / oder ein piezoelektrischer Temperatursensor ist.

12. Messfühler mit einer Sensoreinheit (1) nach einem der Ansprüche 1 bis 11, insbesondere zur Messung eines Gasdrucks und / oder einer Temperatur in einem Motoreinlass einer Brennkraftmaschine und / oder in einem Motorauslass und / oder in einem Verbrennungsraum und / oder in einem Motorgehäuse und / oder in einem Auspuffsystem, oder zur Messung eines Drucks und / oder einer Temperatur eines Motoröls, einer Bremsflüssigkeit, eines Hydrauliköls, eines Getriebeöls, eines Kühlmittels oder einer Kühlflüssigkeit, insbesondere von Wasser.

13. Brennkraftmaschine, hydraulisches oder pneumatisches Werkzeug oder Klimagerät mit einer Sensoreinheit (1) nach einem der Ansprüche 1 bis 11 und / oder mit einem Messfühler nach Anspruch 12.

## Claims

1. A sensor unit for measuring a measurable variable in an aggressive medium (2), including a sensor (4) that is disposed in a sensor casing (3) and has a base element (5) which includes a sensor zone (6), wherein a measuring aperture (7) is provided in the sensor casing (3) for detecting the measurable variable in the sensor zone (6), and which enables an aggressive medium (2) to penetrate as far as the sensor zone (6), and the side of the sensor zone (6) facing away from the measuring aperture (7) has a measuring surface (9) furnished with measuring electronics (8), wherein an electrical supply lead (10) is provided on the sensor (4) for transmitting a sensor signal generated by the measuring electronics (8), and the sensor (4) is sealingly arranged on a stealing surface (11) located on the sensor casing (3) in such a way that the measuring surface (9) is isolated from the aggressive medium (2), wherein a decoupling means (12) is provided between the sensor (4) and the sensor casing (3), and is able to decouple the sensor (4) from thermally and/or mechanically induced changes in the sensor casing (3).

2. The sensor unit as recited in claim 1, wherein the decoupling means (12) is provided directly adjacent to the measuring aperture (7).

3. The sensor unit as recited in either of claims 1 or 2, wherein the decoupling means (12) is provided on an outwardly facing circumferential surface (13) of the sensor (4).

4. The sensor unit as recited in any of the preceding claims, wherein the decoupling means (12) is provided on the side of the base element (5) facing away from the measuring aperture (7) particularly in the area of the electrical supply lead (10).

5. The sensor unit as recited in any of the preceding claims, wherein the aggressive medium (2) is able to be fed to the sensor zone (6) via a measuring sleeve (14), particularly via a measuring sleeve (14) that is arranged in sealing manner on a perforated membrane (15).

6. The sensor unit as recited in claim 5, wherein the measuring sleeve (14) is designed as a decoupling means (12).

7. The sensor unit as recited in claim 5 or 6, wherein the measuring sleeve (14) is arranged in sealing manner on a perforated membrane (15) and the perforated membrane (15) is designed as a decoupling means (12).

8. The sensor unit as recited in any of the preceding claims, wherein the sensor unit includes a fixing means (16), particularly a fixing means (16) designed as a decoupling means (12).

9. The sensor unit as recited in any of the preceding claims, wherein the electrical supply lead (10) is provided in the form of an essentially rigid pin (10) and / or an essentially rigid passthrough (17) for the electrical supply lead (10) so as to fix the sensor (4) mechanically.

10. The sensor unit as recited in any of the preceding claims, wherein reference means (18) is provided such that a reference measurable variable may be applied to the measuring surface (9).

11. The sensor unit as recited in any of the preceding claims, wherein the sensor (4) is a pressure sensor, particularly a piezoresistive pressure sensor and / or a piezoelectric pressure sensor and / or a piezoresistive temperature sensor and / or a piezoelectric temperature sensor.

12. A sensor having a sensor unit (1) as recited in any of claims 1 to 11, particularly for measuring a gas pressure and / or a temperature in an engine intake of an internal combustion engine and / or in an engine outlet and / or in a combustion chamber and / or in an engine housing and /or in an exhaust system, or for measuring a pressure and / or a temperature of an engine oil, a brake fluid, a hydraulic oil, a transmission oil, a refrigerant or a coolant liquid, particularly water.

13. A combustion engine, hydraulic or pneumatic tool or air conditioning unit equipped with a sensor unit (1) as recited in any of claims 1 to 11 and / or with a sensor as recited in claim 12.

## Revendications

1. Unité capteur destiné à mesurer une grandeur de mesure dans un milieu (2) corrosif, comprenant un capteur (4) disposé dans une capsule de détection (3) avec un corps de base (5), qui présente une zone de détection (6), une ouverture de mesure (7) étant prévue pour l'enregistrement de la grandeur de mesure dans la zone de détection (6) dans la capsule de détection (3), qui permet que le milieu (2) corrosif peut pénétrer directement jusqu'à la zone de détection (6), et la zone de détection (6) présentant sur une surface opposée à l'ouverture de mesure (7) une surface de mesure (9) dotée d'une électronique de mesure (8), une alimentation (10) électrique étant prévue pour la transmission d'un signal de capteur généré par l'électronique de mesure (8) sur le capteur (4), et le capteur (4) étant disposé sur une surface d'étanchéité (11) de façon étanche sur la capsule de détection (3) de telle sorte que la surface de mesure (9) est insolée du milieu (2) agressif, un moyen de dissociation (12) étant prévu entre le capteur (4) et la capsule de détection (3), moyen avec lequel le capteur (4) peut être dissocié de variations induites thermiquement et/ou mécaniquement de la capsule de détection (3),

2. unité capteur selon la revendication 1, le moyen de dissociation (12) étant prévu de façon contiguë à l'ouverture de mesure (7).

3. Unité capteur selon la revendication 1 ou 2, le moyen de dissociation (12) étant prévu sur une surface périphérique (13), dirigée radialement vers l'extérieur, du capteur (4).

4. Unité capteur selon l'une quelconque des revendications précédentes, le moyen de dissociation (12) étant prévu sur le corps de base (5) sur le côté opposé à l'ouverture de mesure (7), en particulier dans la zone de l'alimentation (10) électrique.

5. Unité capteur selon l'une quelconque des revendications précédentes, le milieu (2) corrosif pouvant être amené à la zone de détection (6) au moyen d'une douille de mesure (14), en particulier au moyen d'une douille de mesure (14) disposée de façon étanche sur une membrane perforée (15).

6. Unité capteur selon la revendication 5, la douille de mesure (14) étant conçue comme moyen de dissociation (12).

7. Unité capteur selon la revendication 5 ou 6, la douille de mesure (14) étant disposée de façon étanche sur une membrane perforée (15) et la membrane perforée (15) comme moyen de dissociation (12).

8. Unité capteur selon l'une quelconque des revendications précédentes, l'unité capteur comprenant un moyen de fixation (16), en particulier un moyen de fixation (16) conçu comme moyen de dissociation (12).

9. Unité capteur selon l'une quelconque des revendications précédentes, l'alimentation (10) électrique étant conçue sous forme de broche (10) principalement non flexible pour la fixation mécanique du capteur (4) et/ou un passage (17) principalement non flexible étant prévu pour l'alimentation (10).

10. Unité capteur selon l'une quelconque des revendications précédentes, des moyens de référence (18) étant prévus, de sorte que la surface de mesure (9) peut être sollicitée avec une grandeur de mesure de référence.

11. Unité capteur selon l'une quelconque des revendications précédentes, le capteur (4) étant un capteur de pression, en particulier un capteur de pression piézorésistif et/ou un capteur de pression piézoélectrique et/ou un capteur de température piézorésistif et/ou un capteur de température piézoélectrique.

12. Sonde de mesure dotée d'une unité capteur (1) selon l'une quelconque des revendications 1 à 11, en particulier pour la mesure d'une pression de gaz et/ou d'une température dans une entrée de moteur d'un moteur à combustion interné et/ou dans une sortie de moteur et/ou dans une chambre de combustion et/ou dans un carter de moteur et/ou dans un système d'échappement, ou pour la mesure d'une pression et/ou d'une température d'une huile-moteur, d'un liquide de frein, d'une huile hydraulique, d'une huile de boîte de vitesses, d'un agent réfrigérant ou d'un liquide de refroidissement, en particulier de l'eau.

13. Moteur à combustion interne, outil hydraulique ou pneumatique ou climatiseur doté d'une unité capteur (1) selon l'une quelconque des revendications 1 à 11 et/ou d'une sonde de mesure selon la revendication 12.
